# EUROPEAN PATENT APPLICATION

(11) **EP 2 323 045 A1**
(43) Date of publication of application: **18.05.2011**
(21) Application number: 10172691.7
(22) Date of filing: 12.08.2010
(51) Int. Cl.: G06F 17/30

(54) **Simplified search with unified local data and freeform data lookup**

(30) Priority: 06.10.2009 US 249017 P
(71) Applicant: Research In Motion Limited, Waterloo, ON N2L 3W8 (CA)
(72) Inventor: Watt, Robert Anthony, Kanata Ontario K2K 2A5 (CA)
(74) Representative: MERH-IP Matias Erny Reichl Hoffmann

(57) **Abstract**

The present application discloses a method, mobile device and a computer readable medium for initiating an external search from a mobile device. The method involves determining that a search term entered into a user interface on the mobile device was not found in a search of data stored on a first memory on the mobile device and requesting the external search be conducted based on the search term for data stored on a second memory, which is external to the mobile device. Other aspects include a mobile device and computer-readable medium configured for implementing the method described above.

## Description

### Related Applications

This application claims the benefit of U.S. Provisional Patent Application No. 61/249,017 filed on October 6, 2009, which is hereby incorporated by reference in its entirety.

### Technical Field

The present application relates to a mobile device and method for initiating an external search from a mobile device.

### Background

Mobile devices, such as cellular telephones, PDAs (Personal Digital Assistants) and laptops, are often equipped with location determination systems, such as GPS (Global Positioning System). In addition, many mobile devices are also configured to have access to servers or the Internet where they may access location based information, such as city, country, business, point of interest and residential address information or any other information available from those resources. In addition, data such as location information can be stored on the mobile device. The amount of data stored on a mobile device is usually dependent on the amount of memory available on the device itself.

Many mobile devices also have programs or software stored thereon for implementing applications such as but not limited to: calendars; address books; map applications; and Internet browsers.

### Summary

According to a first aspect, there is provided a method for initiating an external search from a mobile device, the method comprising: determining that a search term entered into a user interface on the mobile device was not found in a search of data stored on a first memory on the mobile device; and requesting the external search be conducted based on the search term for data stored on a second memory, which is external to the mobile device.

In some embodiments the requesting is in response to a trigger.

In some embodiments the trigger is at least one of an input to the user interface, an expiry of a time period or a determination that the search term is not located in the data stored on the first memory.

In some embodiments the method further comprises: receiving search results of the external search; and displaying a result based on the search results on a display on the mobile device.

In some embodiments the method further comprises, after the determining, presenting an option on a display to request the external search, wherein the trigger is a positive reply to the option to request the external search.

In some embodiments requesting the external search be conducted for the search term in the data on the second memory comprises transmitting a search request for the search term over a wireless network.

In some embodiments the data on the first memory comprises location based data and the data on the second memory comprises location based data.

In some embodiments requesting the external search comprises requesting location information associated with the search term.

In some embodiments the method further comprises using location information found in response to the external search to display a location associated with the search term on a map on a display on the mobile device.

In some embodiments the method further comprises receiving the search term from the user interface; and searching for the search term in the data stored on the first memory.

In some embodiments the method further comprises storing the search term in a temporary memory on the mobile device for use in the requesting the external search.

According to a second aspect, there is provided a mobile device comprising: a user interface for receiving a search term as input; a first memory having data stored thereon; a transmitter for sending a request for an external search to be performed based on the search term to a device having a second memory external to the mobile device; a receiver for receiving search results from the external search; a display for displaying a result based on the search results; and a processor programmed to at least: determine whether a result based on the search term is found in the data stored on the first memory; and if the result based on the search term is not found in the data stored on the first memory, cause the transmitter to send the request to the device external to the mobile device for the external search.

In some embodiments the mobile device further comprises a temporary memory for storing the search term for use in the request to the device external to the mobile device.

In some embodiments the processor is further programmed to access the temporary memory to obtain the search term for use in the request to the device external to the mobile device.

In some embodiments the data in the first memory is location based data.

In some embodiments the request is for location information associated with the search term.

In some embodiments the display is configured to display a location associated with a result based on the search term on a map.

According to a third aspect, there is provided a computer-readable medium on a mobile device having computer executable instructions stored thereon, that when executed cause a processor on the mobile device to implement a method for initiating an external search from the mobile device, the method comprising: determining that a search term entered into a user interface on the mobile device was not found in a search of data stored on a first memory on the mobile device; and requesting the external search be conducted for the search term in data stored on a second memory, which is external to the mobile device.

In some embodiments the method further comprises: receiving the search term from the user interface; and searching for the search term in the data stored on the first memory.

In some embodiments the external search is for location information associated with the search term and the method further comprises using the location information to display a location associated with the search term on a display on the mobile device.

### Brief Description of the Drawings

Examples of embodiments will now be described in greater detail with reference to the accompanying drawings, in which:
Fig. 1 is a schematic diagram of an example of a system that utilizes location based services;
Figs. 2A to 2C are flowcharts of an example method for initiating an external search;
Fig. 3 is a block diagram of an example mobile device;
Fig. 4 is a block diagram of another example mobile device;
Fig. 5 is a flowchart of an example method for initiating an external search; and
Fig. 6 is a block diagram of an example mobile device on which the methods described herein may be executed.

### Detailed Description

Some mobile devices have programs for implementing a search of data on the device. Some mobile devices have programs for conducting a search of an external memory, sometimes referred to as an off device search. For example, a search of the Internet can be conducted by an Internet browser or a search of location based data on a location server can be conducted by a separate program. Typically, a search of the data on the mobile device is conducted by one program having one user interface and any off device search, even if for the same search term, would require opening a new user interface and entering the search term.

Thus, in one aspect, there is provided a method for initiating an external search from a mobile device, the method comprising: determining that a search term entered into a user interface on the mobile device was not found in a search of data stored on a first memory on the mobile device; and requesting the external search be conducted based on the search term for data stored on a second memory, which is external to the mobile device.

In another aspect, there is provided a mobile device comprising: a user interface for receiving a search term as input; a first memory having data stored thereon; a transmitter for sending a request for an external search for the search term to be performed based on the search term to a device having a second memory external to the mobile device; a receiver for receiving search results from the external search; a display for displaying a result based on the search results; and a processor programmed to at least: determine whether a result based on the search term is located in the data stored on the first memory and if the search term is not found in the data stored on the first memory; cause the transmitter to send the request to the device external to the mobile device for the external search.

In another aspect, there is provided a computer-readable medium on a mobile device having computer executable instructions stored thereon, that when executed cause a processor on the mobile device to implement a method for initiating an external search from the mobile device, the method comprising: determining that a search term entered into a user interface on the mobile device was not found in a search of data stored on a first memory on the mobile device; and requesting the external search be conducted for the search term in data stored on a second memory, which is external to the mobile device.

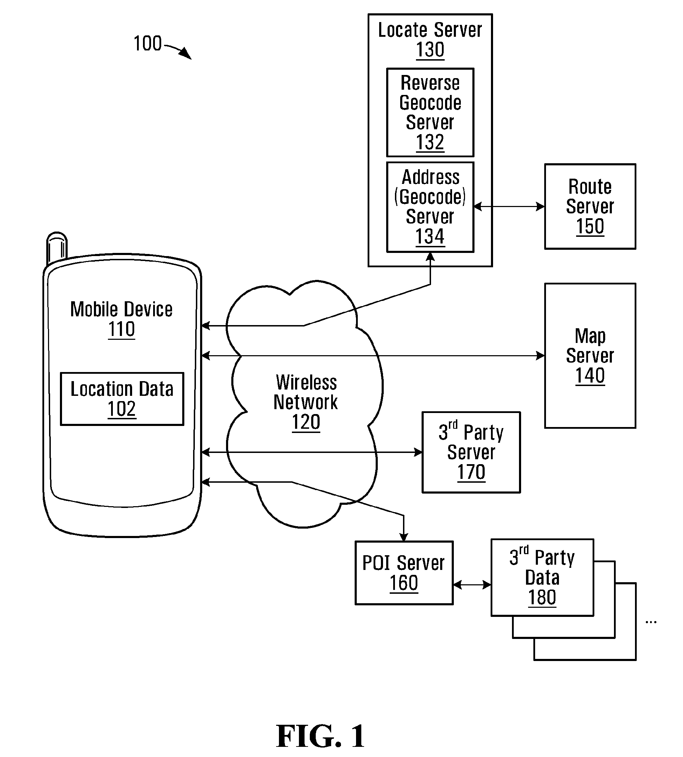

Fig. 1 shows a system 100 for providing location based services in which the mobile devices and methods described herein may operate. The system shown is for exemplary purposes only and it is to be understood that the mobile devices and methods described herein may operate in any suitable environment. The system 100 comprises a mobile device 110 which is in communication with a locate server 130, a map server 140, a POI (Point of Interest) server 160 and a 3^{rd} party server 170 through a wireless network 120. The mobile device 110 is not necessarily in communication with all of the servers indicated above simultaneously. Examples of the wireless network 120 include, but are not limited to, a 3G network, a 4G network, a 1X network, a 1XEV network, MIKE network and an IDEN network. In some embodiments it may be possible that the wireless network includes a WIFI or WiMAX network. In the exemplary system of Fig. 1, the locate server 130 is also in communication with a route server 150. The POI server 160 may obtain 3^{rd} party data 180 from external sources.

The mobile device 110 has location data 102 stored thereon. The location data 102 can be updated by accessing the locate server 130, the map server 140, the 3^{rd} party server 170 or the POI server 160, depending on the type of information needed on the mobile device 110.

In the exemplary system of Fig. 1, the locate server 130 comprises reverse geocode server 132 and address (geocode) server 134. Therefore, the locate server 130 can provide the mobile device 110 with data to display a location of an address or the address associated with a location, for example on a map displayed to the user on the mobile device 110. The locate server 130 can also access the route server 150 to obtain information for the mobile device 110 to display a route from one point on the map to another point on the map or from one address to another address. The route server 150 calculates a route between two locations, provided as coordinates. In some embodiments the coordinates are latitude and longitude coordinates. The mobile device 110 can access the reverse geocode server 132 through the locate server 130 to obtain an address for a location based on latitude and longitude coordinates for the location. In the exemplary system of Fig. 1, the map server 140 provides vector map data that can be used by the mobile device 110 to display a map. The 3^{rd} party server 170 can provide the mobile device with location information not available on the other servers, such as different versions of maps or information related with locations, such as, but not limited to tourist information, information for travel reservations, restaurant reviews, and restaurant reservations. More generally, information related with locations can be any form of information that can be associated with a location. The POI server 160 can provide the mobile device 110 with search data in respect of businesses from services such as Google™ and MSN™. For example, a search for a location to buy food or gas in a specific area or for a specific business name can be enabled. Non-limiting examples of the search results include addresses, phone numbers and reviews of possible destinations such as but not limited to, places of interest, restaurants, and businesses.

It is to be understood that the configuration shown in Fig. 1 is for illustrative purposes only and any number of mobile devices, networks or servers may be part of such a system.

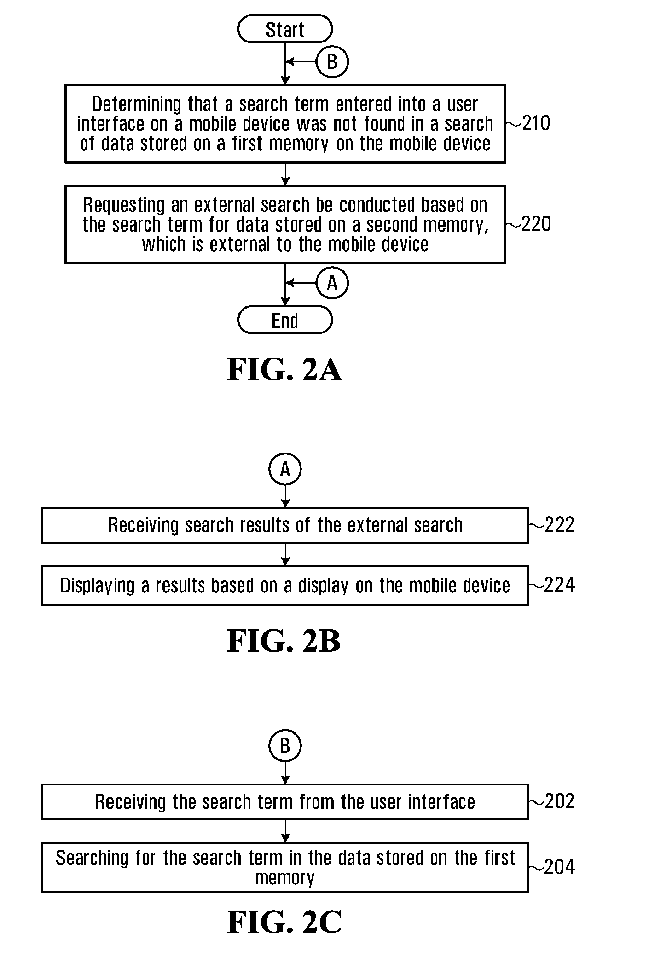

Referring now to Fig. 2A, an example of a method for initiating a search external to a mobile device, initiated by the mobile device will now be described. The method comprises at step 210 determining that a search term or a result related to the search term entered into a user interface on the mobile device was not found in a search of data stored on a first memory on the mobile device. For example, if a search for an address is initiated by inputting a search term, such as from a search window on an application displayed on the mobile device, the mobile device will first search the first memory on the mobile device for the address. By first searching on the first memory on the mobile device, bandwidth can be saved by avoiding an external search if not required, i.e. if there is one or more matches to the search term found on the mobile device. In some embodiments the search of the first memory may occur as the user is inputting the search term. As more characters are input for the search term the search is able to find more specific matching results to the search term, if there is a match. In some embodiments, a search performed of the first memory on the mobile device may locate search results obtained in a previous search by the device. In some embodiments a search performed of the first memory on the mobile device may locate results based on data stored on the mobile device. In some embodiments the user may also have the opportunity to request an update of results found on the mobile device, in which case an external search may be performed. However, in some cases no results based on the search term are found on the mobile device and a search external to the mobile device may be necessary. In the method of Fig. 2A, at step 220 the external search is requested to be conducted based on the search term for data stored on a second memory, which is external to the mobile device. The request for the external search is thus conducted without requiring a user to open a new search window and re-entering the search term for external searches.

In some embodiments, the request for the external search is in response to a trigger. The trigger can be, but is not limited to, an input to a user interface of the mobile device, an expiry of a time period or a determination that the search term is not located in the data on the first memory. A particular example of an input to a user interface may be hitting a "Return" or "Enter" key on a keyboard type user interface or clicking a "Go" or "Search" button on the mobile device display for initiating a search once the search term is entered in a search field. The expiry of a time period may be the expiry of a time period between inputs from a user, for example a defined number of seconds between characters entered into a user interface by the user.

In some embodiments, the method further comprises, after determining step 210, presenting an option on the display of the mobile device to request the external search, wherein the trigger is a positive reply to the option to request the external search. Other triggers could be option based. For example, a user could set an option to always perform the off device or external search as well as the on device search of the first memory on the mobile device. Another trigger could be voice. A user could say something, like "More", and the off device or external search would be performed.

Referring now to Fig. 2B, in some embodiments the method of Fig. 2A may further comprise receiving search results of the external search (step 222) and displaying a result based on search results on the display on the mobile device (step 224). These steps are conducted after the requesting step 220, shown in Fig. 2A as point A. In some embodiments, for example, when the search term is a business, the search results may be directly displayed on the display of the mobile device, such as text identifying a street address of a location. In some embodiments the results of the search may be used by an application to display a map with location information. For example, latitude and longitude information, or a street address information, could be utilized by a map application, and the map application displays a map with the location information of the business.

Referring now to Fig. 2C, in some embodiments the method of Fig. 2A may further comprise receiving the search term from the user interface (step 202) and searching for the search term or a result related to the search term in the data on the first memory (step 204). These steps are performed before the determining step 210 described with reference to Fig. 2A (point B on Fig. 2A).

In some embodiments of the method, requesting the external search be conducted for the search term in data stored on the second memory comprises transmitting a search request for the search term over a wireless network. For example, a search for an address can be sent to a server such as the locate server 130 described with reference to Fig. 1, which can return a location of the address for displaying on a map.

In some embodiments, the data on the first memory comprises location based data and the data on the second memory comprises location based data. Examples of location based data include, but are not limited to, maps, addresses, latitude and longitude coordinates for locations on maps, and data related to points of interest (POI). Data related to POI, in some embodiments, comprises any item that has location based elements that are of interest to a user. In other embodiments, the search term is any term and the first memory and the second memory both contain any type of data that can be searched. For example, the external search could be a search of the Internet by an Internet browser.

In some embodiments, requesting the external search comprises requesting location information associated with the search term. For example, the location information may be an address of a business, in which the business name is the search term. In some embodiments, the location information is location based data stored on a server such as any of the types of servers described above. In some embodiments the second memory is on a server external to the mobile device that is accessible over a wireless network. In some embodiments, the server external to the mobile device may not be directly accessible via the wireless network, but the wireless network may allow access to a network on which the server is located. For example, the wireless network may connect to a wired network which hosts a desired server.

In some embodiments, the method further comprises using the location information to display a location associated with the search term on a map. For example, if the search was for an address, the results of the search could be the latitude and longitude coordinates for the address. Those coordinates can be used by a map application on the mobile device to display the location of the address. In another example, the search may be for, but is not limited to, a business or a place of interest such as a museum or sporting venue, the results of the search may include street address information that could be used by a map application to display the location of the business or place of interest.

In some embodiments, the method further comprises storing the search term in a temporary memory on the mobile device for use in the requesting the external search. The temporary memory, in some embodiments, is a cache memory or in others, a RAM (Random Access Memory). In some embodiments, the search term can be stored locally (device memory) with the results of the search to avoid making more data transactions. As a result, if a similar search term is queried at a later time the locally stored information can be easily accessed. In some embodiments, having the search term stored locally on the device with results of the search enables a search to be performed if there is no radio signal in the wireless network available to access a second memory on a server external to the mobile device.

In some embodiments the user may have the opportunity to control the amount of the search results that are maintained on the mobile device. For example if a large amount of search results are returned, the user may only wish to maintain search results that have better than a given percentage match rating.

In some embodiments the user may also have the opportunity to control the duration of time that search results or search terms, or both, may be maintained on the mobile device.

The search results can be displayed in a graphical user interface (GUI) in some embodiments. In some embodiments, the search results are used as an input to an application running on the mobile device such that the application can use the data to provide the user with desired information. For example the application may be a map application that requires location information, such as latitude and longitude information or street address information, to display a desired location, i.e. a location related to the search term, to a user.

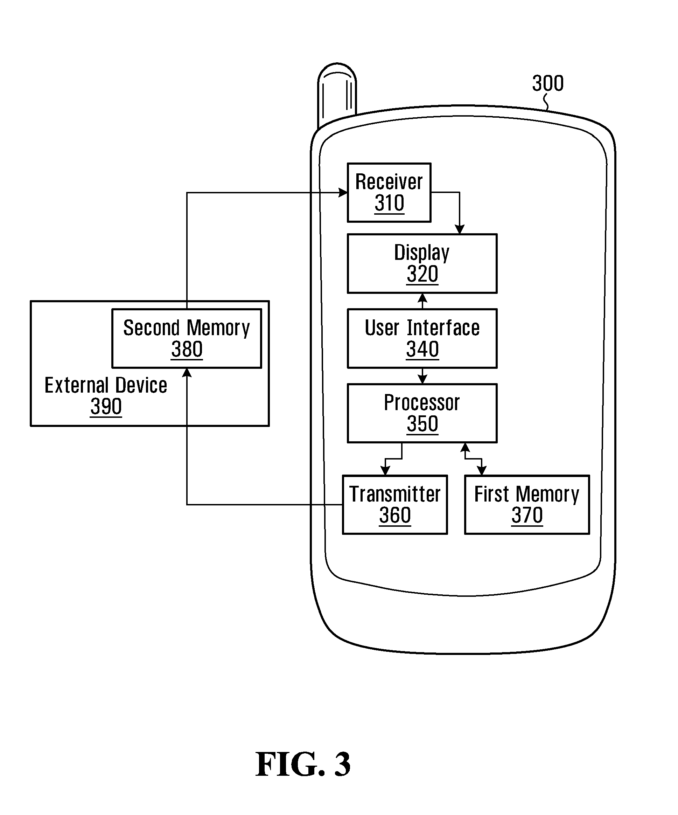

The methods described herein are for implementation on a mobile device. One example of such a mobile device 300 will now be described with reference to Fig. 3. The mobile device 300 includes a receiver 310, a display 320, a user interface 340, a processor 350, a transmitter 360, and a first memory 370.

The user interface 340 is for receiving a search term as input. The user interface 340, in some embodiments comprises a window or at least a data entry field in a search application, into which the search term can be entered. The search term can be entered, according to some embodiments, using at least one of, but not limited to, a keyboard, a touchscreen, a stylus, a roller ball and a microphone together with voice activated programming. In some embodiments, the search is activated via an application programming interface (API) or another program. For example, a program may provide a link to a useful term. A user may want to search on that term. In some embodiments, the search can be initiated, by the user clicking on the term or a context sensitive menu.

The first memory 370 has data stored thereon, such as but not limited to, location based data. In some embodiments, the first memory includes an address book, map data, a calendar, and any other data used by applications on the mobile device that can be searched.

The transmitter 360 is for sending a request for an external search to be performed based on the search term to an external device 390 having a second memory 380 with data stored thereon. In some embodiments, the transmitter 360 is a transmitter for transmitting signals over a wireless network using an antenna on the mobile device 300.

The receiver 310 is for receiving search results based on the search performed of data on the second memory 380. The receiver 310, in some embodiments is for receiving signals over a wireless network, through an antenna on the mobile device 300.

The display 320 is for displaying a search window for entering the search term, displaying results based on the search results and other standard uses of a mobile device display. Non-limiting examples of the display 320 include an LCD (Liquid Crystal Display) screen, an LED (Light Emitting Diode) screen, an OLED (Organic LED) screen and a CRT (Cathode Ray Tube) screen. In some embodiments, the display may be augmented with an audio output. With such an audio output, the search results could be spoken for the visually impaired or for a user unable to read the results, such as when driving. The search results are displayed on the display using a GUI in some embodiments. In some embodiments, the display 320 is configured to display a location associated with the search term on a map. Receiver 310 is shown inputting directly to display 320, however it is to be understood that in some embodiments there may be some level of processing performed on a received signal to enable the received signal to be displayed on display 320.

The processor 350 is programmed to determine whether the search term is located in the data on the first memory 370 and if the search term is not found in the data on the first memory 370 to cause the transmitter 360 to send the request to the external device 390 for the external search. In some embodiments, the request is for location information associated with the search term.

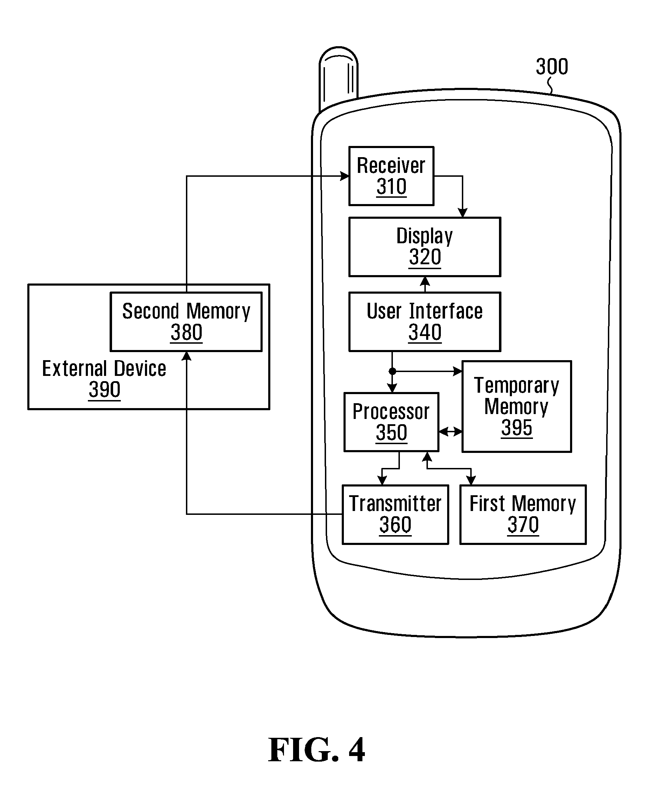

In some embodiments, the mobile device 300 further comprises a temporary memory for storing the search term for use in sending the request to the external device. An example of the mobile device 300 with a temporary memory 395 is shown in Fig. 4. Fig. 4 is the same as Fig. 3, with the exception of the temporary memory 395 to which the user interface 340 can send the search term for storage and which the processor 350 can access to obtain the search term for searching at least one of the first memory 370 and the second memory 380. Exemplary embodiments of the temporary memory 395 include, but are not limited to, RAM memory, flash memory and cache memory.

In some embodiments of the mobile device 300, the processor 350 is further programmed to access the temporary memory 390 to obtain the search term for use in the request to the external device.

In another aspect, there is provided a tangible, non-transistory computer-readable medium on a mobile device, the computer-readable medium having computer executable instructions stored thereon, that when executed cause a processor on the mobile device to implement any of the methods described herein. The tangible computer-readable medium in some embodiments is a memory on the mobile device. In some embodiments, the computer-readable medium is ROM (Read Only Memory), RAM, flash memory or a USB (Universal Serial Bus) memory device, such as a USB key or flash drive. Any other suitable tangible memory can be used.

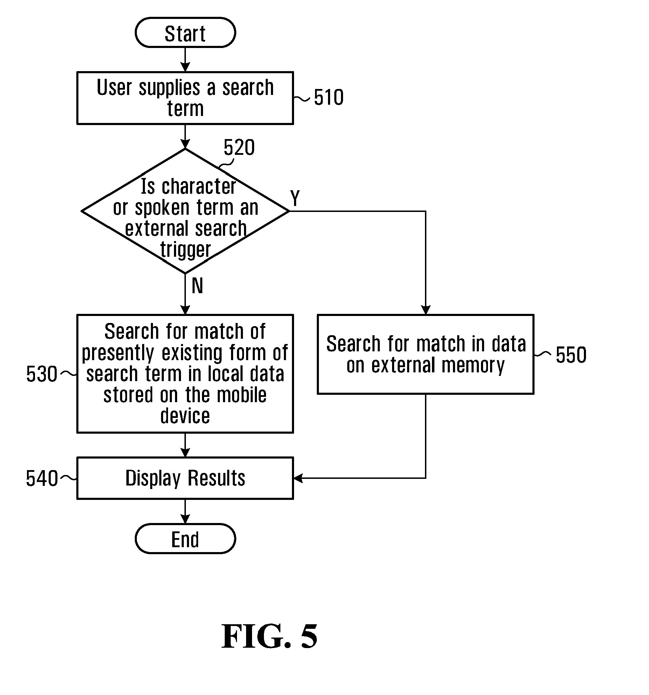

Referring to Fig. 5, a method according to another aspect will now be described. At step 510, the method starts with a user supplying a search term by, but not limited to, typing in a character on a keyboard or a touch screen on the mobile device or speaking a term or phrase as part of a voice activated input. Step 520 involves a determination of whether the last typed character or spoken term of the phrase is an external search trigger. If the determination is yes ("Y" path of block 520), the method continues to step 550, which includes searching an external memory for a match to the search term that is provided to the mobile device. If the determination at step 520 is no ("N" path of block 520), the method continues with step 530, which involves a search of local data stored on the mobile device for a match to the presently existing form of the search term. The determination at step 520 may be "no" for instance if the input string is still being provided to the mobile device or the external search trigger has not yet been activated. Subsequent to the search being performed in each of steps 530 and 550, the method continues on to step 540, which includes displaying the results of the search.

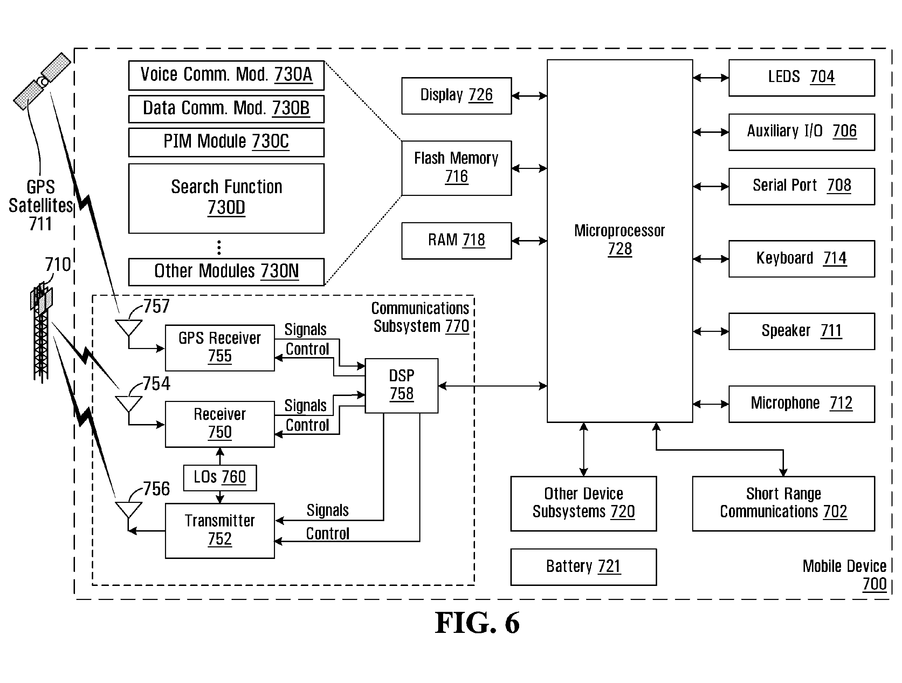

Referring now to Fig. 6, shown is a block diagram of another mobile device 700 that may implement any of the methods described herein. It is to be understood that the mobile device 700 is shown with very specific details for example purposes only.

A processing device (a microprocessor 728) is shown schematically as coupled between a keyboard 714 and a display 726. The display 726 is a non-limiting example of the display 320 described with reference to Figs. 3 and 4. The microprocessor 728 controls operation of the display 726, as well as overall operation of the mobile device 700, in response to actuation of keys on the keyboard 714 by a user. The microprocessor 728 is a non-limiting example of the processor 350 described with reference to Figs. 3 and 4.

The mobile device 700 has a housing that may be elongated vertically, or may take on other sizes and shapes (including clamshell housing structures). The keyboard 714 may include a mode selection key, or other hardware or software for switching between text entry and telephony entry.

In addition to the microprocessor 728, other parts of the mobile device 700 are shown schematically. These include: a communications subsystem 770; a short-range communications subsystem 702; the keyboard 714 and the display 726, along with other input/output devices including a set of LEDS 704, a set of auxiliary I/O devices 706, a serial port 708, a speaker 711 and a microphone 712; as well as memory devices including a flash memory 716 and a Random Access Memory (RAM) 718; and various other device subsystems 720. The mobile device 700 may have a battery 721 to power the active elements of the mobile device 700. The mobile device 700 is in some embodiments a two-way radio frequency (RF) communication device having voice and data communication capabilities. In addition, the mobile device 700 in some embodiments has the capability to communicate with other computer systems via the Internet.

Operating system software executed by the microprocessor 728 is in some embodiments stored in a persistent store, such as the flash memory 716, but may be stored in other types of memory devices, such as a read only memory (ROM) or similar storage element. In addition, system software, specific device applications, or parts thereof, may be temporarily loaded into a volatile store, such as the RAM 718. Communication signals received by the mobile device 700 may also be stored to the RAM 718.

The microprocessor 728, in addition to its operating system functions, enables execution of software applications on the mobile device 700. A predetermined set of software applications that control basic device operations, such as a voice communications module 730A and a data communications module 730B, may be installed on the mobile device 700 during manufacture. In addition, a personal information manager (PIM) application module 730C may also be installed on the mobile device 700 during manufacture. The PIM application is in some embodiments capable of organizing and managing data items, such as e-mail, calendar events, voice mails, appointments, and task items. The PIM application is also in some embodiments capable of sending and receiving data items via a wireless network 710. In some embodiments, the data items managed by the PIM application are seamlessly integrated, synchronized and updated via the wireless network 710 with the device user's corresponding data items stored or associated with a host computer system.

In addition, a software application to perform a search function 730D may be installed. The search function 730D may implement any of the methods described herein for initiating an external search from a mobile device.

As well, additional software modules, illustrated as another software module 730N, may be installed during manufacture.

Communication functions, including data and voice communications, are performed through the communication subsystem 770, and possibly through the short-range communications subsystem 702. The communication subsystem 770 includes a receiver 750, a transmitter 752 and one or more antennas, illustrated as a receive antenna 754 and a transmit antenna 756. The receiver 750 is a non-limiting example of the receiver 310 described with reference to Figs. 3 and 4. In addition, the communication subsystem 770 also includes a processing module, such as a digital signal processor (DSP) 758, and local oscillators (LOs) 760. The specific design and implementation of the communication subsystem 770 is dependent upon the communication network in which the mobile device 700 is intended to operate. For example, the communication subsystem 770 of the mobile device 700 may be designed to operate with the Mobitex™, DataTAC™ or General Packet Radio Service (GPRS) mobile data communication networks and also designed to operate with any of a variety of voice communication networks, such as Advanced Mobile Phone Service (AMPS), Time Division Multiple Access (TDMA), Code Division Multiple Access CDMA, Personal Communications Service (PCS), Global System for Mobile Communications (GSM), etc. Other types of data and voice networks, both separate and integrated, may also be utilized with the mobile device 700.

Some embodiments also comprise a GPS receiver 755 with an antenna 757 for receiving GPS data from one or more GPS satellites 711.

The GPS receiver 755 is in communication with the DSP 758.

Network access requirements vary depending upon the type of communication system. For example, in the Mobitex™ and DataTAC™ networks, mobile devices are registered on the network using a unique Personal Identification Number (PIN) associated with each device. In GPRS networks, however, network access is associated with a subscriber or user of a device. A GPRS device therefore requires a subscriber identity module, commonly referred to as a Subscriber Identity Module (SIM) card, in order to operate on a GPRS network.

When required network registration or activation procedures have been completed, the mobile device 700 may send and receive communication signals over the communication network 710. Signals received from the communication network 710 by the receive antenna 754 are routed to the receiver 750, which provides for signal amplification, frequency down conversion, filtering, channel selection, etc., and may also provide analog to digital conversion. Analog-to-digital conversion of the received signal allows the DSP 758 to perform more complex communication functions, such as demodulation and decoding. In a similar manner, signals to be transmitted to the network 710 are processed (e.g., modulated and encoded) by the DSP 758 and are then provided to the transmitter 752 for digital to analog conversion, frequency up conversion, filtering, amplification and transmission to the communication network 710 (or networks) via the transmit antenna 756.

In addition to processing communication signals, the DSP 758 provides for control of the receiver 750 and the transmitter 752. For example, gains applied to communication signals in the receiver 750 and the transmitter 752 may be adaptively controlled through automatic gain control algorithms implemented in the DSP 758.

In a data communication mode, a received signal, such as a text message or web page download, is processed by the communication subsystem 770 and is input to the microprocessor 728. The received signal is then further processed by the microprocessor 728 for an output to the display 726, or alternatively to some other auxiliary I/O devices 706. A device user may also compose data items, such as e-mail messages, using the keyboard 714 and/or some other auxiliary I/O device 706, such as a touchpad, a rocker switch, a thumb-wheel, or some other type of input device. The composed data items may then be transmitted over the communication network 710 via the communication subsystem 770.

In a voice communication mode, overall operation of the device is substantially similar to the data communication mode, except that received signals are output to a speaker 711, and signals for transmission are generated by a microphone 712. Alternative voice or audio I/O subsystems, such as a voice message recording subsystem, may also be implemented on the device 700. In addition, the display 726 may also be utilized in voice communication mode, for example, to display the identity of a calling party, the duration of a voice call, or other voice call related information.

The short-range communications subsystem 702 enables communication between the mobile device 700 and other proximate systems or devices, which need not necessarily be similar devices. For example, the short-range communications subsystem may include an infrared device and associated circuits and components, or a Bluetooth™ communication module to provide for communication with similarly-enabled systems and devices.

What has been described is merely illustrative of the application of the principles of methods, modules and devices described herein. Other arrangements and methods can be implemented by those skilled in the art without departing from the spirit and scope of the embodiments.

## Claims

1. A method for initiating an external search from a mobile device (110,300,700), the method comprising:
determining (210) that a search term entered into a user interface (340) on the mobile device was not found in a search of data stored on a first memory (370) on the mobile device (110,300,700); and
requesting (220) the external search be conducted based on the search term for data stored on a second memory, which is external to the mobile device.

2. The method of claim 1, wherein the requesting (220) is in response to a trigger.

3. The method of claim 2, wherein the trigger is at least one of an input to the user interface (340), an expiry of a time period or a determination that the search term is not located in the data stored on the first memory (370).

4. The method of any one of claims 1 to 3, further comprising:
receiving (222) search results of the external search; and
displaying (224) a result based on the search results on a display (320,726) on the mobile device (110,300,700).

5. The method of claim 2, further comprising, after the determining (210), presenting an option on a display (320,726) to request the external search, wherein the trigger is a positive reply to the option to request the external search.

6. The method of any one of claims 1 to 5, wherein requesting (220) the external search be conducted for the search term in the data on the second memory comprises transmitting a search request for the search term over a wireless network (120).

7. The method of any one of claims 1 to 6, wherein the data on the first memory (370) comprises location based data and the data on the second memory comprises location based data.

8. The method of any one of claims 1 to 7, wherein requesting the external search comprises requesting location information associated with the search term.

9. The method of claim 8, further comprising using location information found in response to the external search to display a location associated with the search term on a map on a display (320,726) on the mobile device (110,300,700).

10. The method of any one of claims 1 to 9, further comprising:
receiving (202) the search term from the user interface (340); and
searching (204) for the search term in the data stored on the first memory (370).

11. The method of any one of claims 1 to 10, further comprising storing the search term in a temporary memory (395) on the mobile device (110,300,700) for use in the requesting the external search.

12. A mobile device (300) comprising:
a user interface (340) for receiving a search term as input;
a first memory (370) having data stored thereon;
a transmitter (360) for sending a request for an external search to be performed based on the search term to a device having a second memory external to the mobile device;
a receiver (310) for receiving search results from the external search;
a display (320) for displaying a result based on the search results; and
a processor (350) programmed to at least:
determine whether a result based on the search term is found in the data stored on the first memory (370); and
if the result based on the search term is not found in the data stored on the first memory (370), cause the transmitter (360) to send the request to the device external to the mobile device (300) for the external search.

13. The mobile device of claim 12, further comprising a temporary memory (395) for storing the search term for use in the request to the device external to the mobile device (300).

14. The mobile device (300) of claim 13, wherein the processor (350) is further programmed to access the temporary memory (395) to obtain the search term for use in the request to the device external to the mobile device (300).

15. A computer-readable medium on a mobile device (300) having computer executable instructions stored thereon, that when executed cause a processor (350) on the mobile device (300) to implement a method for initiating an external search from the mobile device (300), the method comprising:
determining (210) that a search term entered into a user interface (340) on the mobile device (300) was not found in a search of data stored on a first memory (370) on the mobile device (300); and
requesting (220) the external search be conducted for the search term in data stored on a second memory, which is external to the mobile device (300).

## Amended claims

### Amended claims in accordance with Rule 137(2) EPC.

**1.** A method for initiating an external search from a mobile device (110,300,700), the method comprising:
determining (210) that a search term entered into a user interface (340) on the mobile device was not found in a search of data stored on a first memory (370) on the mobile device (110,300,700); and
requesting (220) the external search be conducted based on the search term for data stored on a second memory, which is external to the mobile device;
wherein requesting the external search comprises requesting location information associated with the search term.

**2.** The method of claim 1, wherein the requesting (220) is in response to a trigger.

**3.** The method of claim 2, wherein the trigger is at least one of an input to the user interface (340), an expiry of a time period or a determination that the search term is not located in the data stored on the first memory (370).

**4.** The method of any one of claims 1 to 3, further comprising:
receiving (222) search results of the external search; and
displaying (224) a result based on the search results on a display (320,726) on the mobile device (110,300,700).

**5.** The method of claim 2, further comprising, after the determining (210), presenting an option on a display (320,726) to request the external search, wherein the trigger is a positive reply to the option to request the external search.

**6.** The method of any one of claims 1 to 5, wherein requesting (220) the external search be conducted for the search term in the data on the second memory comprises transmitting a search request for the search term over a wireless network (120).

**7.** The method of any one of claims 1 to 6, wherein the data on the first memory (370) comprises location based data and the data on the second memory comprises location based data.

**8.** The method of claim 7, further comprising using location information found in response to the external search to display a location associated with the search term on a map on a display (320,726) on the mobile device (110,300,700).

**9.** The method of any one of claims 1 to 8, further comprising:
receiving (202) the search term from the user interface (340); and
searching (204) for the search term in the data stored on the first memory (370).

**10.** The method of any one of claims 1 to 9, further comprising storing the search term in a temporary memory (395) on the mobile device (110,300,700) for use in the requesting the external search.

**11.** A mobile device (300) comprising:
a user interface (340) for receiving a search term as input;
a first memory (370) having data stored thereon;
a transmitter (360) for sending a request for an external search to be performed based on the search term to a device having a second memory external to the mobile device;
a receiver (310) for receiving search results from the external search;
a display (320) for displaying a result based on the search results; and
a processor (350) programmed to at least:
determine whether a result based on the search term is found in the data stored on the first memory (370); and
if the result based on the search term is not found in the data stored on the first memory (370), cause the transmitter (360) to send the request to the device external to the mobile device (300) for the external search;
wherein the request comprises location information associated with the search term.

**12.** The mobile device of claim 11, further comprising a temporary memory (395) for storing the search term for use in the request to the device external to the mobile device (300).

**13.** The mobile device (300) of claim 12, wherein the processor (350) is further programmed to access the temporary memory (395) to obtain the search term for use in the request to the device external to the mobile device (300).

**14.** A computer-readable medium on a mobile device (300) having computer executable instructions stored thereon, that when executed cause a processor (350) on the mobile device (300) to implement a method for initiating an external search from the mobile device (300), the method comprising:
determining (210) that a search term entered into a user interface (340) on the mobile device (300) was not found in a search of data stored on a first memory (370) on the mobile device (300); and
requesting (220) the external search be conducted for the search term in data stored on a second memory, which is external to the mobile device (300);
wherein requesting the external search comprises requesting location information associated with the search term.
